# EUROPEAN PATENT APPLICATION

(11) **EP 4 546 483 A2**
(43) Date of publication of application: **30.04.2025**
(21) Application number: 25164527.1
(22) Date of filing: 08.03.2021
(51) Int. Cl.: H01M 10/0525

(54) **ELECTROLYTIC SOLUTION, ELECTROCHEMICAL DEVICE, AND ELECTRONIC DEVICE**

(30) Priority: 20.03.2020 CN 202010203089
(62) Divisional of application: 21161382.3
(71) Applicant: Ningde Amperex Technology Limited, Ningde, Fujian 352100 (CN)
(72) Inventor: ZHU, Rui, Ningde City, 352100 (CN)
(74) Representative: Klunker IP Patentanwälte PartG mbB

(57) **Abstract**

This disclosure provides an electrolytic solution, an electrochemical device including the electrolytic solution, and an electronic device including the electrochemical device. The electrolytic solution includes a first additive, and the first additive includes propylene carbonate, a compound represented by Formula I, and a compound represented by Formula II. The electrolytic solution is applicable in the electrochemical device to effectively improve intermittent cycle performance of the electrochemical device and effectively suppress a voltage drop of the electrochemical device after high-temperature storage.

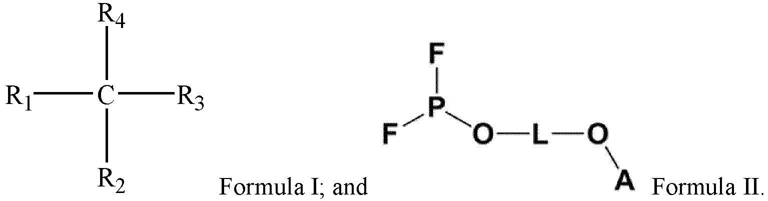

## Description

### TECHNICAL FIELD

This disclosure relates to an electrolytic solution, an electrochemical device, and an electronic device.

### BACKGROUND

Electrochemistry is a science of studying a phenomenon of a charged interface formed by two types of conductors and a change that occurs on the interface. In an electrochemical device, an electrolytic solution is critical to performance of the electrochemical device.

The foregoing description merely provides background technologies, but it is not considered that the foregoing "background technologies" constitute the conventional art of this disclosure.

### SUMMARY

In some embodiments, this disclosure provides an electrolytic solution. The electrolytic solution includes a first additive. The first additive includes propylene carbonate, a compound represented by Formula I, and a compound represented by Formula II. wherein, the compound of Formula I is

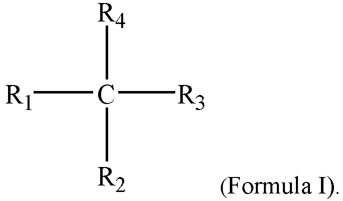

In Formula I, R₁, R₂, and R₃ are each independently -(CH₂)ₐ-CN or -(CH₂)_{b}-O-(CH₂)_{c}-CN; R₄ is H, a C₁-C₅ alkyl, -(CH₂)ₐ-CN, or -(CH₂)_{b}-O-(CH₂)_{c}-CN; and at least one of R₁, R₂, R₃, and R₄ is -(CH₂)_{b}-O-(CH₂)_{c}-CN, where a, b, and c are each independently selected from integers in a range of 0-10. The compound of Formula II is

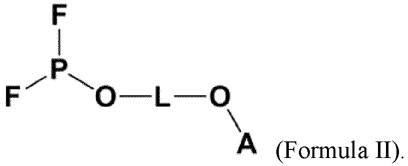

In Formula II, A is a C₁-C₅ alkyl, and L is a C₁-C₁₀ alkylidene or Cₙ(Rₐ)₂ₙ-O-Cₘ(R_{b})₂ₘ, where Rₐ and R_{b} are each independently H or a C₁-C₅ alkyl, and n and m are independently selected from integers in a range of 1-5.

In some embodiments, based on a total mass of the electrolytic solution, a mass percent of the propylene carbonate is 2%-20%; and/or based on a total mass of the electrolytic solution, a mass percent of the compound represented by Formula II is 0.001%-5%.

In some embodiments, a mass of the propylene carbonate is greater than a total mass of the compound represented by Formula I and the compound represented by Formula II.

In some embodiments, 0.01 ≤ (X+Y) ≤ 8, and X ≥ Y, wherein X is a mass percent (X%) of the compound represented by Formula I based on a total mass of the electrolytic solution and Y is a mass percent (Y%) of the compound represented by Formula II based on the total mass of the electrolytic solution.

In some embodiments, the compound represented by Formula I includes at least one of 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tri s(cyanoethoxy)heptane, 1,2,6-tris(cyanoethoxy)hexane, 1,2,5-tris(cyanoethoxy)pentane, or a compound represented by Formula I-C:

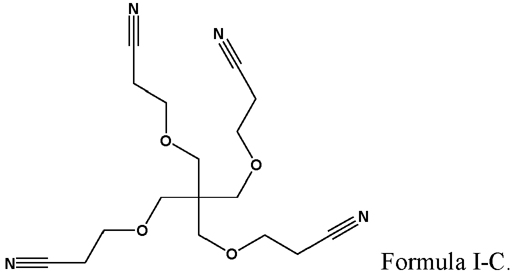

In some embodiments, the compound represented by Formula II includes at least one of compounds represented by Formula II-A:

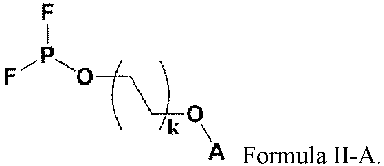

In Formula II-A, A is a C₁-C₅ alkyl, and k is selected from integers in a range of 1-5.

In some embodiments, the electrolytic solution further includes a second additive. The second additive includes at least one of adiponitrile, 1,3,6-hexanetrinitrile, or lithium difluorophosphate.

In some embodiments, this disclosure further provides an electrochemical device, including a positive electrode plate, a negative electrode plate, a separator, and the electrolytic solution.

In some embodiments, a negative electrode includes a negative current collector and a negative active material layer. The negative active material layer is disposed on a surface of the negative current collector, and the negative active material layer includes a negative active material.

In some embodiments, 10 ≤ (M/S) ≤ 100, wherein M is a mass of the compound represented by Formula II and S is a reaction area of the negative active material layer where M is measured in mg and S is measured in m².

In some embodiments, this disclosure further provides an electronic device, including the electrochemical device.

### DETAILED DESCRIPTION OF EMBODIMENTS

Understandably, the disclosed embodiments are merely examples of this disclosure, and this disclosure may be implemented in various forms. Therefore, the details disclosed herein are not to be construed as a limitation, but are merely used as a basis of the claims and are used as a representative basis for teaching a person of ordinary skill in the art to implement this disclosure in various forms.

In the context of this disclosure, unless otherwise expressly specified and defined, the terms such as "first", "second", "third", "Formula I", "Formula II", "Formula I-C", "Formula II-A", "I-A", "I-B", "I-C", and "II-a" are merely used for ease of description, but are not to be understood as indicating or implying relative importance and mutual relationships.

In the context of this disclosure, unless otherwise specified, functional groups of all compounds may be substituted or unsubstituted.

### Electrolytic Solution

In some embodiments, an electrolytic solution includes a first additive. The first additive includes propylene carbonate, a compound represented by Formula I and a compound represented by Formula II. The compound of Formula I is

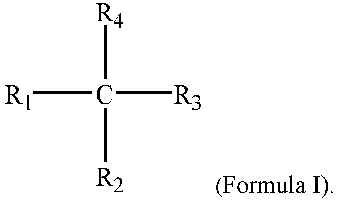

In Formula I, R₁, R₂, and R₃ are each independently -(CH₂)ₐ-CN or -(CH₂)_{b}-O-(CH₂)_{c}-CN; R₄ is H, a C₁-C₅ alkyl, -(CH₂)ₐ-CN, or -(CH₂)_{b}-O-(CH₂)_{c}-CN; and at least one of R₁, R₂, R₃, and R₄ is -(CH₂)_{b}-O-(CH₂)_{c}-CN, where a, b, and c are each independently selected from integers in a range of 0-10. The compound of Formula II is

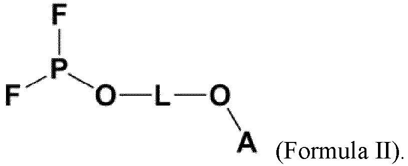

In Formula II, A is a C₁-C₅ alkyl, and L is a C₁-C₁₀ alkylidene or Cₙ(Rₐ)₂ₙ-O-Cₘ(R_{b})₂ₘ, where Rₐ and R_{b} are each independently H or a C₁-C₅ alkyl, and n and m are independently selected from integers in a range of 1-5.

People are imposing increasingly higher requirements on an energy density of an electrochemical device, and developing a high-voltage electrochemical device is one of effective methods for increasing the energy density of the electrochemical device. However, under a high voltage, oxidation activity of a positive active material of the electrochemical device is higher, but stability of the positive active material is lower. This tends to decompose the electrolytic solution on a surface of a positive electrode or deteriorate the electrochemical material, thereby reducing the energy density.

In this disclosure, the propylene carbonate, the compound represented by Formula I, and the compound represented by Formula II are added into the electrolytic solution to effectively improve intermittent cycle performance of the electrochemical device and effectively suppress a voltage drop of the electrochemical device after high-temperature storage. The intermittent cycle performance of the electrochemical device is a performance indicator discovered in recent years and used to represent reliability of the electrochemical device. In practical applications, an electronic device usually operates in a high state of charge, but is sometimes on standby in a high state of charge for a long time. Therefore, compared with non-intermittent cycle performance, the intermittent cycle performance indicator for testing an electrical capacity retention rate of the electrochemical device after a plurality of charge and discharge cycles is more capable of reflecting an actual use environment of the electronic device. The voltage drop means a potential difference generated between two ends of the electrochemical device after a current passes through the electrochemical device. An electrochemical device characterized by excellent intermittent cycle performance and a low voltage drop that is exhibited after high-temperature storage helps to increase the energy density under a high voltage.

In some embodiments, the compound represented by Formula I includes at least one of 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tri s(cyanoethoxy)heptane, 1,2,6-tris(cyanoethoxy)hexane, or 1,2,5-tris(cyanoethoxy)pentane.

In some embodiments, the compound represented by Formula I includes a compound represented by Formula I-C:

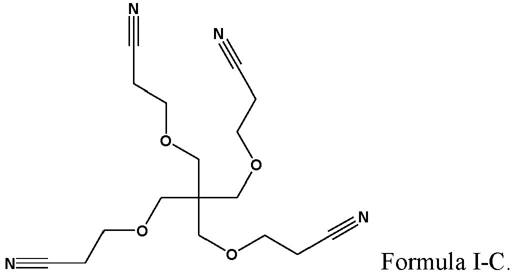

In some embodiments, the compound represented by Formula II includes at least one of compounds represented by Formula II-A:

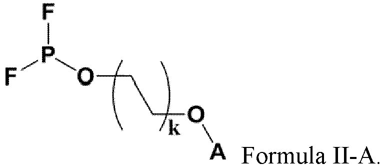

In Formula II-A, A is a C₁-C₅ alkyl, and k is selected from integers in a range of 1-5.

In some embodiments, the compound represented by Formula II includes a compound represented by Formula II-a:

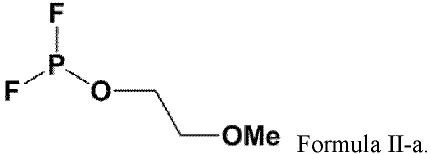

In some embodiments, based on a total mass of the electrolytic solution, a mass percent of the propylene carbonate is 2%-20%. When the mass percent of the propylene carbonate is within such a range, the intermittent cycle performance of the electrochemical device can be further improved. In some embodiments, based on the total mass of the electrolytic solution, a lower limit of the mass percent of the propylene carbonate is 5%, 8%, or 10%, and an upper limit of the mass percent of the propylene carbonate is 20% or 15%. A range of the mass percent of the propylene carbonate may be formed by any numerical value of the upper limit or the lower limit.

In some embodiments, a mass of the propylene carbonate is greater than a total mass of the compound represented by Formula I and the compound represented by Formula II.

In some embodiments, 0.01 ≤ (X+Y) ≤ 8, and X ≥ Y, wherein X is a mass percent (X%) of the compound represented by Formula I based on a total mass of the electrolytic solution and Y is a mass percent (Y%) of the compound represented by Formula II based on the total mass of the electrolytic solution. When the mass percent of the compound represented by Formula I and the compound represented by Formula II meets the foregoing requirements, the compound represented by Formula I and the compound represented by Formula II are more likely to exert a synergistic effect, more effectively improve intermittent cycle performance of the electrochemical device, and more effectively suppress a voltage drop of the electrochemical device after high-temperature storage. In some embodiments, 0.05 ≤ (X+Y) ≤ 8, and X ≥ Y In some embodiments, 0.1 ≤ (X+Y) ≤ 8, and X ≥ Y In some embodiments, 0.1 ≤ (X+Y) ≤ 6, and X ≥ Y. In some embodiments, 0.5 ≤ (X+Y) ≤ 6, and X ≥ Y In some embodiments, 0.5 ≤ (X+Y) ≤ 5, and X ≥ Y

In some embodiments, based on the total mass of the electrolytic solution, the mass percent of the compound represented by Formula II is 0.001%-5%. In some embodiments, when the mass percent of the compound represented by Formula II is within such a range, the voltage drop of the electrochemical device after high-temperature storage is further suppressed. In some embodiments, based on the total mass of the electrolytic solution, a lower limit of the mass percent of the compound represented by Formula II is 0.01%, 0.5%, or 1%, and an upper limit of the mass percent of the compound represented by Formula II is 5%, 3% or 2%. A range of the mass percent of the compound represented by Formula II may be formed by any numerical value of the upper limit or the lower limit.

In some embodiments, the electrolytic solution further includes a nonaqueous solvent. The nonaqueous solvent is a nonaqueous solvent applicable to an electrochemical device as is well-known in the art, for example, a nonaqueous organic solvent that is usually used. In some embodiments, the nonaqueous solvent includes at least one of a cyclic carbonate, a chain carbonate, a carboxylate, a cyclic ether, a chain ether, a phosphorus-containing organic compound, a sulfur-containing organic compound, or an aromatic fluorine-containing compound.

In some embodiments, the cyclic carbonate includes at least one of an ethylene carbonate (EC) and a butylene carbonate. In some embodiments, the cyclic carbonate is at least one selected from C₃-C₆ cyclic carbonates.

In some embodiments, the chain carbonate includes at least one of a dimethyl carbonate, an ethyl methyl carbonate, a diethyl carbonate (DEC), a methyl n-propyl carbonate, an ethyl n-propyl carbonate, or a di-n-propyl carbonate. In some embodiments, the chain carbonate includes a fluorine-substituted chain carbonate. The fluorine-substituted chain carbonate includes at least one of bis(fluoromethyl)carbonate, a bis(difluoromethyl)carbonate, a bis(trifluoromethyl)carbonate, a bis(2-fluoroethyl)carbonate, a bis(2,2-difluoroethyl)carbonate, a bis(2,2,2-trifluoroethyl)carbonate, a 2-fluoroethyl methyl carbonate, a 2,2-difluoroethyl methyl carbonate, or a 2,2,2-trifluoroethyl methyl carbonate.

In some embodiments, the carboxylate includes a cyclic carboxylate and a chain carboxylate. In some embodiments, the cyclic carboxylate includes gamma-butyrolactone. In some embodiments, the chain carboxylate includes at least one of methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, the chain carboxylate includes a fluorine-substituted chain carboxylate. The fluorine-substituted chain carboxylate includes at least one of methyl trifluoroacetate, ethyl trifluoroacetate, propyl trifluoroacetate, butyl trifluoroacetate, and 2,2,2-trifluoroethyl trifluoroacetate.

In some embodiments, the cyclic ether includes at least one of tetrahydrofuran, 2-methyl tetrahydrofuran, 1,3-dioxolane, 2-methyl-1,3-dioxolane, 4-methyl 1,3-dioxolane, 1,3-dioxane, 1,4-dioxane, or dimethoxypropane.

In some embodiments, the chain ether includes at least one of dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, or1,2-ethoxymethoxyethane.

In some embodiments, the phosphorus-containing organic compound includes at least one of trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris(2,2,2-trifluoroethyl) phosphate, or tris(2,2,3,3,3)-pentafluoropropyl) phosphate.

In some embodiments, the sulfur-containing organic compound includes at least one of sulfolane, 2-methyl sulfolane, 3-methyl sulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, or dibutyl sulfate. In some embodiments, the sulfur-containing organic compound includes a fluorine-substituted sulfur-containing organic compound.

In some embodiments, the aromatic fluorine-containing compound includes at least one of fluorobenzene, difluorobenzene, trifluorobenzene, tetrafluorobenzene, pentafluorobenzene, hexafluorobenzene, or trifluoromethylbenzene.

In some embodiments, the nonaqueous solvent includes at least one of cyclic carbonate, chain carbonate, cyclic carboxylate, or chain carboxylate.

In some embodiments, the nonaqueous solvent includes at least one of ethylene carbonate (EC), diethyl carbonate (DEC), propyl propionate, ethyl propionate, propyl acetate, or ethyl acetate.

In some embodiments, the nonaqueous solvent includes at least one of ethylene carbonate (EC), diethyl carbonate (DEC), propyl propionate, ethyl propionate, or gamma butyrolactone. In some embodiments, the nonaqueous solvent includes ethylene carbonate (EC), diethyl carbonate (DEC), and propyl propionate.

In some embodiments, the electrolytic solution further includes an electrolyte salt. The electrolyte salt is an electrolyte salt applicable to an electrochemical device as is well known in the art. For each different electrochemical device, a suitable electrolyte salt may be selected. For example, for a lithium-ion battery, the electrolyte salt is usually a lithium salt. In some embodiments, the lithium salt includes at least one of an inorganic lithium salt, a lithium tungstate salt, a lithium carboxylate salt, a lithium sulfonate salt, a lithium imide salt, a lithium methylate salt, a lithium (malonate) borate salt, a lithium (malonate) phosphate salt, a fluorine-containing organic lithium salt, a lithium (oxalato)borate salt, or a lithium (oxalate)phosphate salt.

In some embodiments, the inorganic lithium salt includes at least one of LiPF₆, LiBF₄, LiClO₄, LiAlF₄, LiSbF₆, LiTaF₆, or LiWF₇.

In some embodiments, the lithium tungstate salt includes LiWOF₅.

In some embodiments, the lithium carboxylate salt includes at least one of HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, or CF₃CF₂CF₂CF₂CO₂Li.

In some embodiments, the lithium sulfonate salt includes at least one of FSO₃Li, CH₃SO₃Li, CH₂FSO₃Li, CHF₂SO₃Li, CF₃SO₃Li, CF₃CF₂SO₃Li, CF₃CF₂CF₂SO₃Li, or CF₃CF₂CF₂CF₂SO₃Li.

In some embodiments, the lithium imide salt includes at least one of LiN(FCO)₂, LiN(FCO)(FSO₂), LiN(FSO₂)₂, LiN(FSO₂)(CF₃SO₂), LiN(CF₃SO₂)₂, LiN(C₂F₅SO₂)₂, cyclic 1,2-perfluoroethane bissulfonimide lithium, cyclic 1,3-perfluoropropane bissulfonimide lithium, or LiN(CF₃SO₂)(C₄F₉SO₂).

In some embodiments, the lithium methylate salt includes at least one of LiC(FSO₂)₃, LiC(CF₃SO₂)₃, or LiC(C₂F₅SO₂)₃.

In some embodiments, the lithium (malonate) borate salt includes at least one of lithium bis(malonate) borate and lithium difluoro(malonate) borate.

In some embodiments, the lithium (malonate) phosphate salt includes at least one of lithium tris(malonate) phosphate, lithium difluorobis(malonate) phosphate, or lithium tetrafluoro(malonate) phosphate.

In some embodiments, the fluorine-containing organic lithium salt includes at least one of LiPF₄(CF₃)₂, LiPF₄(C₂F₅)₂, LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, LiBF₂(C₂F₅SO₂)₂, LiPF₃(CF₃)₃, or LiPF₃(C₂F₅)₃.

In some embodiments, the lithium (oxalato)borate salt includes at least one of lithium difluoro(oxalato)borate and lithium bis(oxalato)borate.

In some embodiments, the lithium (oxalate)phosphate salt includes at least one of lithium tetrafluoro(oxalate)phosphate, lithium difluorobis(oxalate)phosphate, or lithium tris(oxalate)phosphate.

In some embodiments, the electrolyte salt includes at least one of LiPF₆, LiSbF₆, LiTaF₆, FSO₃Li, CF₃SO₃Li, LiN(FSO₂)₂, LiN(FSO₂)(CF₃SO₂), LiN(CF₃SO₂)₂, LiN(C₂F₅SO₂)₂, cyclic 1,2-perfluoroethane bissulfonimide lithium, cyclic 1,3-perfluoropropane bissulfonimide lithium, LiC(FSO₂)₃, LiC(CF₃SO₂)₃, LiC(C₂F₅SO₂)₃, LiBF₃CF₃, LiBF₃C₂F₅, LiPF₃(CF₃)₃, LiPF₃(C₂F₅)₃, lithium difluoro(oxalato)borate, lithium bis(oxalato)borate, or lithium difluorobis(oxalate)phosphate. The electrolyte salt that includes the foregoing lithium salt can further improve output power characteristics, high-rate charge-discharge characteristics, high-temperature storage characteristics, and cycle characteristics of the electrochemical device.

A content of the electrolyte salt is not specifically limited as long as effects of this disclosure are not impaired. In some embodiments, based on a total volume of the electrolytic solution, a lower limit of a total molar concentration of lithium in the electrolyte salt is 0.3 mol/L, 0.4 mol/L, or 0.5 mol/L, and an upper limit of the total molar concentration of lithium in the electrolyte salt is 3 mol/L, 2.5 mol/L, or 2.0 mol/L. A range of the total molar concentration of lithium in the electrolyte salt may be formed by any numerical value of the upper limit or lower limit. When the concentration of the electrolyte salt is within such a range, the content of lithium serving as charged particles in the electrolytic solution is more appropriate, a viscosity of the electrolytic solution is more appropriate, and the electrolytic solution is of higher conductivity.

In some embodiments, additives in the electrolytic solution further include a second additive. The second additive is an additive applicable to an electrochemical device as is well known in the art.

In some embodiments, the second additive includes at least one of a fluorocarbonate, an ethylene carbonate containing a carbon-carbon double bond, a compound containing a sulfur-oxygen double bond, or an acid anhydride.

When a lithium-ion battery is charged/discharged, the fluorocarbonate can work together with the propionate to form a stable protection film on a surface of the negative electrode, thereby suppressing decomposition reaction of the electrolytic solution. In some embodiments, the propionate is at least one selected from methyl propionate, ethyl propionate, and propyl propionate. In some embodiments, a structural formula of the fluorocarbonate is: C = O(OR_{1'})(OR_{2'}), where R_{1'} and R_{2'} are each independently a C₁-C₆ alkyl or a C₁-C₆ haloalkyl, at least one of R_{1'} and R_{2'} is a C₁-C₆ fluoroalkyl, and at least one of R_{1'} and R_{2'} combines with an atom connected to it to form a 5- to 7-membered ring. In some embodiments, the fluorocarbonate includes at least one of a fluoroethylene carbonate, a cis 4,4-difluoroethylene carbonate, a trans 4,4-difluoroethylene carbonate, a 4,5-difluoroethylene carbonate, a 4-fluoro-4-methyl ethylene carbonate, a 4-fluoro-5-methyl ethylene carbonate, a trifluoromethyl formate carbonate, a trifluoroethyl formate carbonate, or an ethyl trifluoroacetate carbonate.

In some embodiments, the ethylene carbonate containing a carbon-carbon double bond includes a vinylene carbonate, a methyl vinylene carbonate, an ethyl vinylene carbonate, a 1,2-dimethylvinylene carbonate, a 1,2-diethyl vinylene carbonate, a fluorovinylidene carbonate, a trifluoromethyl vinylene carbonate, a vinyl ethylene carbonate, a 1-methyl-2-vinyl ethylene carbonate, a 1-ethyl-2-vinyl ethylene carbonate, a 1-n-propyl-2-vinyl ethylene carbonate, a 1-methyl-2-vinyl ethylene carbonate, a 1,1-divinyl ethylene carbonate, a 1,2-divinyl ethylene carbonate, a 1,1-dimethyl-2-methylene ethylene carbonate, and a 1,1-diethyl-2-methylene ethylene carbonate. In some embodiments, the ethylene carbonate containing a carbon-carbon double bond includes a vinylene carbonate. The second additive that includes a vinylene carbonate can further improve overall performance of the electrochemical device.

In some embodiments, the compound containing a sulfur-oxygen double bond includes at least one of cyclic sulfate, a chain sulfate, a chain sulfonate, a cyclic sulfonate, a chain sulfite, or a cyclic sulfite. In some embodiments, the cyclic sulfate includes at least one of a 1,2-ethylene glycol sulfate, a 1,2-propylene glycol sulfate, a 1,3-propylene glycol sulfate, a 1,2-butylene glycol sulfate, a 1,3 -butylene glycol sulfate, a 1,4-butylene glycol sulfate, a 1,2-pentanediol sulfate, a 1,3-pentanediol sulfate, a 1,4-pentanediol sulfate, or a 1,5 pentanediol sulfate. In some embodiments, the chain sulfate includes at least one of a dimethyl sulfate, an ethyl methyl sulfate, or a diethyl sulfate. In some embodiments, the chain sulfate includes at least one of a dimethyl sulfate, an ethyl methyl sulfate, or a diethyl sulfate. In some embodiments, the chain sulfonate includes at least one of a fluorosulfonate such as a methyl fluorosulfonate and an ethyl fluorosulfonate; a methyl methanesulfonate; an ethyl methanesulfonate; a butyl dimethanesulfonate; a 2-(methylsulfonyloxy) methyl propionate; or a 2-(methylsulfonyloxy) ethyl propionate. In some embodiments, the cyclic sulfonate includes at least one of 1,3-propane sultone, 1-fluoro-1,3-propane sultone, 2-fluoro-1,3-propane sultone, 3-fluoro-1,3-propane sultone, 1-methyl-1,3-propane sultone, 2-methyl-1,3-propane sultone, 3-methyl-1,3-propane sultone, 1-propene-1,3-sultone, 2-propene-1,3-sultone, 1-fluoro-1-propene-1,3-sultone, 2-fluoro-1-propene-1,3-sultone, 3-fluoro-1-propene-1,3-sultone, 1-fluoro-2-propene-1,3-sultone, 2-fluoro-2-propene-1,3-sultone, 3-fluoro-2-propene-1,3-sultone, 1-methyl-1-propene-1,3-sultone, 2-methyl-1-propene-1,3-sultone, 3-methyl-1-propene-1,3-sultone, 1-methyl-2-propene- 1,3-sultone, 2-methyl-2-propene-1,3-sultone, 3-methyl-2-propene-1,3-sultone, 1,4-butane sultone, 1,5-pentane sultone, methylene methane disulfonate, or ethylene methane disulfonate. In some embodiments, the chain sulfite includes at least one of a dimethyl sulfite, an ethyl methyl sulfite, or a diethyl sulfite. In some embodiments, the cyclic sulfite includes at least one of a 1,2-ethylene glycol sulfite, a 1,2-propylene glycol sulfite, a 1,3-propylene glycol sulfite, a 1,2-butylene glycol sulfite, a 1,3 -butylene glycol sulfite, a 1,4-butylene glycol sulfite, a 1,2-pentanediol sulfite, a 1,3-pentanediol sulfite, a 1,4-pentanediol sulfite, or a 1,5 pentanediol sulfite.

In some embodiments, the acid anhydride includes at least one of a cyclic phosphoric anhydride, a carboxylic anhydride, or a sulfonic anhydride. In some embodiments, the cyclic phosphoric anhydride includes at least one of a trimethyl phosphate cyclic anhydride, a triethyl phosphate cyclic anhydride, or a tripropyl phosphate cyclic anhydride. In some embodiments, the carboxylic anhydride includes at least one of a succinic anhydride, a glutaric anhydride, or a maleic anhydride. In some embodiments, the sulfonic anhydride includes a disulfonic anhydride or a carboxylic sulfonic anhydride. In some embodiments, the disulfonic anhydride includes at least one of an ethane disulfonic anhydride and a propane disulfonic anhydride. In some embodiments, the carboxylic sulfonic anhydride includes at least one of a sulfobenzoic anhydride, a sulfopropionic anhydride, or a sulfobutyric anhydride.

In some embodiments, the second additive includes a fluorocarbonate and an ethylene carbonate containing a carbon-carbon double bond.

In some embodiments, the second additive includes a fluorocarbonate and a compound containing a sulfur-oxygen double bond.

In some embodiments, the second additive includes a fluorocarbonate and a cyclic phosphoric anhydride.

In some embodiments, the second additive includes a fluorocarbonate and a carboxylic anhydride.

In some embodiments, the second additive includes a fluorocarbonate and a sulfonic anhydride.

In some embodiments, the second additive includes a fluorocarbonate and a carboxylic sulfonic anhydride.

In some embodiments, the second additive includes at least one of adiponitrile, 1,3,6-hexanetrinitrile, or lithium difluorophosphate. The electrolytic solution that further includes at least one of the foregoing additives further improves intermittent cycle performance of the electrochemical device and more effectively suppresses the voltage drop of the electrochemical device after high-temperature storage.

A content of the second additive is not specifically limited as long as effects of this disclosure are not impaired. In some embodiments, based on the total mass of the electrolytic solution, a mass percent of the second additive is 0.01%-15%. In some embodiments, based on the total mass of the electrolytic solution, the mass percent of the second additive is 0.1%-10%. In some embodiments, based on the total mass of the electrolytic solution, the mass percent of the second additive is 1%-5%.

In some embodiments, based on the total mass of the electrolytic solution, a content of the propionate is 1.5-30 times the content of the second additive. In some embodiments, based on the total mass of the electrolytic solution, the content of the propionate is 1.5-20 times the content of the second additive. In some embodiments, based on the total mass of the electrolytic solution, the content of the propionate is 2-20 times or 5-20 times the content of the second additive. In some embodiments, the propionate is at least one selected from methyl propionate, ethyl propionate, or propyl propionate.

In some embodiments, the electrolytic solution further includes a third additive. The third additive is, for example, a negative electrode coating film forming agent, a positive electrode protection agent, an overcharge prevention agent, or any combination thereof. In some embodiments, based on the total mass of the electrolytic solution, a mass percent of the third additive is 0-5 wt%. In some embodiments, based on the total mass of the electrolytic solution, the mass percent of the third additive is 0.01-5 wt%. In some embodiments, based on the total mass of the electrolytic solution, the mass percent of the third additive is 0.2-5 wt%.

### Electrochemical Device

An electrochemical device according to this disclosure is, for example, a primary battery, a secondary battery, a fuel battery, a solar battery, or a capacitor. The secondary battery is, for example, a lithium secondary battery. The lithium secondary battery includes but is not limited to a lithium metal secondary battery, a lithium-ion secondary battery, a lithium polymer secondary battery, or a lithium-ion polymer secondary battery.

In some embodiments, the electrochemical device includes a positive electrode plate, a negative electrode plate, a separator, and the electrolytic solution described above herein.

The positive electrode plate is a positive electrode plate applicable to an electrochemical device as is well known in the art. For example, the positive electrode plate may be a positive electrode plate described in the US Patent No. US9812739B.

In some embodiments, the positive electrode plate includes a positive current collector and a positive active material layer. The positive active material layer is disposed on a surface of the positive current collector. The positive active material layer includes a positive active material.

In some embodiments, the positive current collector is a metal. The metal is, for example, but without limitation, an aluminum foil.

In some embodiments, the positive active material includes, but is not limited to, at least one of a sulfide, a phosphate compound, and a lithium transition metal composite oxide. The positive active material may be selected from various types of conventional materials suitable for serving as a positive active material of an electrochemical device and capable of inserting and extracting active ions as is well known in the art. For example, the positive active material may be the positive active material described in the US Patent No. US9812739B.

In some embodiments, a method for preparing the positive electrode plate is a positive electrode plate preparation method applicable to an electrochemical device as is well known in the art.

In some embodiments, the positive active material layer further includes a binder. In the positive active material, the binder is added, and a conductive agent and a thickener are added as required to make a positive electrode slurry. Then the positive electrode slurry is coated onto the positive current collector, and, after being dried, is calendered to obtain a positive electrode plate. After being dried and cold-calendered, the positive electrode slurry forms a positive active material layer. In preparing the positive electrode slurry, a solvent is usually added, a binder is added in the positive active material, and a conductive agent and a thickener are added as required, and then the positive active material is dissolved or dispersed in the solvent to make the positive electrode slurry. The solvent is removed by volatilizing during the drying. The binder is a binder applicable to a positive active material layer as is well known in the art. The binder is, for example, but without limitation, polyvinylidene fluoride. The conductive agent is a conductive agent applicable to a positive active material layer as is well known in the art. The conductive agent is, for example, but without limitation, Super-P. The solvent is a solvent applicable to a positive active material layer as is well known in the art. The solvent is, for example, but without limitation, N-methyl-pyrrolidone (NMP).

In some embodiments, a structure of the positive electrode plate is a positive electrode plate structure applicable to an electrochemical device as is well known in the art. For example, the structure of the positive electrode plate is the structure described in the US Patent No. US9812739B.

The negative electrode plate is a negative electrode plate applicable to an electrochemical device as is well known in the art. For example, the negative electrode plate may be the negative electrode plate described in the US Patent No. US9812739B.

In some embodiments, the negative electrode plate includes a negative current collector and a negative active material layer. The negative active material layer is disposed on a surface of the negative current collector. The negative active material layer includes a negative active material.

In some embodiments, the negative current collector is a metal. The metal is, for example, but without limitation, a copper foil.

In some embodiments, the negative active material includes, but is not limited to, at least one of a carbonaceous material, a silicon-carbon material, an alloy material, and a lithium-containing metal composite oxide. The negative active material may be selected from various types of conventional materials suitable for serving as a negative active material of an electrochemical device and capable of electrochemically inserting and extracting active ions as is well known in the art.

In some embodiments, a method for preparing the negative electrode plate is a negative electrode plate preparation method applicable to an electrochemical device as is well known in the art.

In some embodiments, the negative active material layer further includes a binder and a solvent. In the negative active material, the binder and the solvent are added, and a thickener, a conductive agent, a filler, and the like are added as required to make a negative electrode slurry. Then the negative electrode slurry is coated onto the negative current collector, and, after being dried, is calendered to obtain a negative electrode plate. After being dried and cold-calendered, the negative electrode slurry forms a negative active material layer. Similarly, in preparing the negative electrode slurry, a solvent is usually added. The solvent is removed during the drying. The binder is a binder applicable to a negative active material layer as is well known in the art. The binder is, for example, but without limitation, styrene butadiene rubber. The solvent is a solvent applicable to a negative active material layer as is well known in the art. The solvent is, for example, but without limitation, water. The thickener is a thickener applicable to a negative active material layer as is well known in the art. The thickener is, for example, but without limitation, carboxymethyl cellulose. In some embodiments, when the negative active material includes an alloy material, the negative active material layer may be formed by using a method such as an evaporation method, a sputtering method, and a plating method.

In some embodiments, a structure of the negative electrode plate is a negative electrode plate structure applicable to an electrochemical device as is well known in the art.

In some embodiments, when the negative active material includes a lithium-containing metal composite oxide material, the negative active material layer may be formed by using a spherical gel-like conductive skeleton and metal particles dispersed in the conductive skeleton. In some embodiments, a porosity of the spherical gel-like conductive skeleton is 0.5%-5%. In some embodiments, when the negative active material includes a lithium-containing metal composite oxide material, a protection layer is provided on the negative active material layer.

In some embodiments, 10 ≤ (M/S) ≤ 100, wherein M is a mass of the compound represented by Formula II and S is a reaction area of the negative active material layer, where M is measured in mg and S is measured in m². When the mass M of the compound represented by Formula II and the reaction area S of the negative active material layer is within such a range, the voltage drop of the electrochemical device after high-temperature storage is further suppressed. In some embodiments, 20 ≤ (M/S) ≤ 90. In some embodiments, 30 ≤ (M/S) ≤ 70.

The reaction area of the negative active material layer may be measured by using the following method: using a surface area meter (an automatic surface area measurement device manufactured by Ohkura Riken) as an measurement instrument, pre-drying a sample at 350 °C for 15 minutes under nitrogen ventilation, and then accurately adjusting a pressure of a nitrogen-helium mixture gas to 0.3 by using a relative pressure value of nitrogen relative to an atmospheric pressure, and measuring a specific surface area by using a single-point Brunauer-Emmett-Teller (BET) nitrogen adsorption method based on a gas flow technique. The specific surface area of the negative active material layer is measured according to this method. The specific surface area of the negative active material layer means a specific surface area of an entire negative active material layer containing the negative active material and the additives (the binder, the conductive agent, the thickener, the filler, and the like). The mass of the negative active material layer, that is, a total mass of the entire negative active material layer containing the negative active material and the additives (the binder, the conductive agent, the thickener, the filler, and the like), is measured. The reaction area of the negative active material layer is calculated according to the following formula: reaction area = specific surface area of the negative active material layer × mass of the negative active material layer.

In some embodiments, the mass M of the compound represented by Formula II is 17.5 mg-525 mg, and the reaction area S of the negative active material layer is 1.75m²-5 m². The reaction area of the negative active material layer may be obtained by exercising control in a way known in the art. In some embodiments, the reaction area of the negative active material layer is obtained by controlling the specific surface area of the negative active material layer and the mass of the negative active material layer. In some embodiments, the specific surface area of the negative active material layer is 0.35-1 m²/g, and the mass of the negative active material layer is 5-7 g. Reaction area of the negative active material layer = specific surface area of the negative active material layer × mass of the negative active material layer.

The separator is a separator applicable to an electrochemical device and keeping stable to the electrolytic solution in use as is well known in the art. The separator is, for example, but without limitation, resin, glass fiber, and an inorganic compound.

In some embodiments, the separator includes at least one of polyolefin, aromatic polyamide, polytetrafluoroethylene, and polyethersulfone. In some embodiments, the polyolefin includes at least one of polyethylene and polypropylene. In some embodiments, the polyolefin includes polypropylene. In some embodiments, the separator is formed by stacking a plurality of layers of materials. For example, the separator is a three-layer separator laminated in order of polypropylene, polyethylene, and polypropylene.

In some embodiments, the separator includes at least one of an oxide such as an aluminum oxide and silicon dioxide; a nitride such as an aluminum nitride and a silicon nitride; and a sulfate salt. In some embodiments, the sulfate salt includes at least one of a barium sulfate and a calcium sulfate. In some embodiments, the form of the separator includes a particle form or a fiber form.

This disclosure does not impose any special limitation on the form of the separator. In some embodiments, the form of the separator includes a porous sheet form or a non-woven fabric form that is excellent at retaining liquid. When the separator is in the form of a porous sheet or a non-woven fabric, this disclosure does not specifically limit the porosity of the separator. In some embodiments, a lower limit of the porosity of the separator is 20%, 35%, or 45%, and an upper limit of the porosity of the separator is 90%, 85%, or 75%. A range of the porosity of the separator may be formed by any numerical value of the upper limit or the lower limit. When the porosity of the separator is within such a range, insulation and mechanical strength of the separator are further ensured, a separator resistance is further suppressed, and the electrochemical device has high rate performance.

In some embodiments, the form of the separator includes a thin film form. For example, the separator is in the form of a non-woven fabric, a woven fabric, or a microporous film. In some embodiments, a pore size of the separator in the form of a thin film is 0.01 µm-1 µm, and a thickness of the separator is 5 µm-50 µm.

In some embodiments, the separator is formed by generating a composite porous layer on the surface of the positive electrode and/or the negative electrode by using a resin-based binder, where the composite porous layer contains the foregoing inorganic particles. In some embodiments, fluororesin is used as a resin-based binder. Therefore, 90% of alumina particles whose particle size is less than 1 µm can form a porous layer on both sides of the positive electrode to form a separator.

This disclosure does not impose any special limitation on the thickness of the separator. In some embodiments, a lower limit of the thickness of the separator is 1 µm, 5 µm, or 8 µm, and an upper limit of the thickness of the separator is 50 µm, 40 µm, and 30 µm. A range of the thickness of the separator may be formed by any numerical value of the upper limit or the lower limit. When the thickness of the separator is within such a range, insulation and mechanical strength of the separator are further enhanced, and the rate performance and the energy density of the electrochemical device are further ensured.

This disclosure does not impose any special limitation on an average pore size of the separator. In some embodiments, a lower limit of the average pore size of the separator is 0.05 µm, and an upper limit of the average pore size of the separator is 0.5 µm or 0.2 µm. A range of the average pore size of the separator may be formed by any numerical value of the upper limit or the lower limit. When the average pore size of the separator is within such a range, a short circuit is further avoided, a separator resistance is further suppressed, and therefore, the electrochemical device has high rate performance.

An electrode assembly is a component of the electrochemical device. The electrode assembly includes a positive electrode plate, a negative electrode plate, and a separator. The positive electrode plate is separated from the negative electrode plate by the separator. The electrode assembly may be in a rolled form, a stacked form, or a rolled and stacked form. In an embodiment, the positive electrode plate and the negative electrode plate are separated by the separator, and are stacked into a stacked electrode assembly. In an embodiment, the positive electrode plate and the negative electrode plate are separated by the separator, and spirally rolled into a rolled electrode assembly. A shape of the rolled electrode assembly is, for example, a cylindrical shape or a prismatic shape. In some embodiments, based on the total mass of the electrolytic solution, a lower limit of a mass percent of the electrode assembly is 40% or 50%, and an upper limit of the mass percent of the electrode assembly is 90% or 80%. A range of the mass percent of the electrode assembly may be formed by any numerical value of the upper limit or the lower limit. When the mass percent of the electrode assembly is within such a range, a capacity of the electrochemical device is further ensured, deterioration of performance such as charge and discharge cycle performance and high-temperature capacity retention rate is suppressed, and normal operation of a gas release valve is ensured, where the deterioration of performance arises from an increase of an internal pressure. In the electrochemical device, a quantity of electrode assemblies is not limited, and may be, for example, one or more. In some embodiments, a plurality of electrode assemblies are disposed side by side, and electrically connected together.

In some embodiments, the electrochemical device further includes a current collection structure. The current collection structure is a current collection structure applicable to an electrochemical device as is well known in the art. In some embodiments, the current collection structure is a structure that reduces a resistance of a wiring part and a splicing part. In some embodiments, when the electrode assembly is a stacked electrode assembly, the current collection structure is a structure formed by electrically connecting (for example, welding) a current collector of a corresponding electrode plate polarity to a corresponding output terminal. When an area of an electrode increases, an internal resistance increases, and a current collection structure is applicable in which two or more terminals are disposed in the electrode to reduce the resistance. In some embodiments, when the electrode assembly is a rolled electrode assembly, the current collection structure is a structure formed by arranging two or more wires on the positive electrode and the negative electrode separately and by bunching the wires on the terminals. This current collection structure helps to reduce the internal resistance of the electrode assembly.

In some embodiments, the electrochemical device further includes an outer packaging shell. The outer packaging shell is an outer packaging shell applicable to an electrochemical device and keeping stable to the electrolytic solution in use as is well known in the art. The outer packaging shell is, for example, but without limitation, a metal-type outer packaging shell or a laminated-film outer packaging shell. In some embodiments, the outer packaging shell is one selected from a nickel-plated steel plate, stainless steel, aluminum, an aluminum alloy, and a magnesium alloy. In some embodiments, the outer packaging shell is made of resin and an aluminum foil. In some embodiments, the metal-type outer packaging shell is a sealed airtight structure formed by welding metals to each other by means of laser welding, resistance welding, or ultrasonic welding, or is a riveted structure formed by using the metals cushioned by a resin gasket. In some embodiments, the laminated-film outer packaging shelling is a sealed airtight structure formed by thermally bonding resin layers to each other, or by sandwiching a resin between the resin layers, where the resin is different from the resin used in the laminated film. Airtightness of the electrochemical device is improved by the resin that is sandwiched between the resin layers and different from the resin used in the laminated film. When the airtight structure is formed by thermally bonding the resin layers through a current collection terminal, in view of the bonding between the metal and the resin, the sandwiched resin may be a resin that contains a polar group or a modified resin into which a polar group is introduced. A shape of the outer packaging shell is not specially limited in this disclosure, and may be, for example, a cylindrical or prismatic shape.

In some embodiments, the electrochemical device further includes a protection element. The protection element is a protection element applicable to an electrochemical device as is well known in the art, and may be, for example, but without limitation, a positive temperature coefficient (PTC) thermistor, a temperature fuse, or a thermistor that increases a resistance when abnormal heat is radiated or an excessive current is passed, or a valve (a current cutoff valve) that cuts off the current in a circuit by rapidly increasing the internal pressure or internal temperature of the battery during abnormal heat radiation. The protection element may be an element that remains idle during routine use under a high current, and may also be designed in a form that prevents abnormal heat radiation or thermal runaway even if no protection element exists.

### Electronic Device

An electronic device according to this disclosure is any electronic device, and may be, for example, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, and a lithium-ion capacitor. It needs to be noted that the electrochemical device according to this disclosure is applicable not only to the electronic devices enumerated above, but also applicable to energy storage stations, marine transport vehicles, and air transport vehicles. The air transport vehicles include air transport vehicles in the atmosphere and air transport vehicles outside the atmosphere.

In some embodiments, the electronic device includes the foregoing electrochemical device according to this disclosure.

This disclosure is further described below with reference to embodiments. Understandably, the embodiments are merely intended to illustrate this disclosure but are not intended to limit the scope of this disclosure.

Unless otherwise expressly specified, reagents, materials, and instruments used in the following embodiments and comparative embodiments are all commercially available or obtained by synthesis.

Specific reagents used are as follows:
additive:
acetonitrile (AN for short);
first additive:
   propylene carbonate (PC for short);
   compound represented by Formula I:
      1,2,3-tris(2-cyanoethoxy)propane (TCEP for short), 1,2,5-tris(cyanoethoxy)pentane (I-A for short), 1,2,6-tris(cyanoethoxy)hexane (I-B for short), and 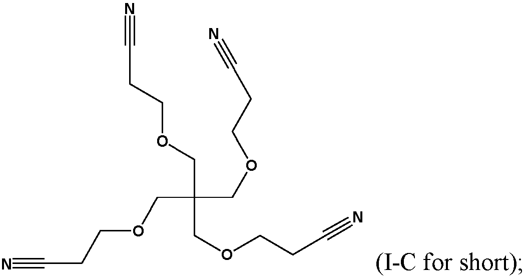 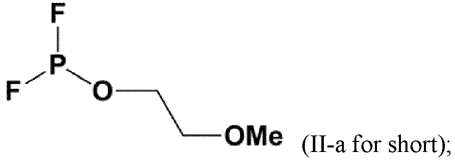
      compound represented by Formula II:
      second additive:
         adiponitrile (ADN for short);
         1,3,6-hexanetricarbonitrile (HTCN for short);
         lithium difluorophosphate (LiPO₂F₂ for short);
         nonaqueous solvent: ethylene carbonate (EC for short), diethyl carbonate (DEC for short), and propyl propionate (PP for short); and
         lithium salt: lithium hexafluorophosphate (LiPF₆).

Lithium-ion batteries in Embodiments 1-27 and Comparative Embodiments 1-7 are prepared by using the following method:

### (1) Preparing an electrolytic solution

The preparation method includes: mixing nonaqueous solvents EC:DEC:PC at a mass ratio of 1:1:1 in a dry argon environment (for example, water content < 10 ppm), then adding a lithium salt LiPF₆ for dissolving in the nonaqueous solvents, and finally adding additives at a mass percent (shown in Table 1), and fully mixing the solution to obtain an electrolytic solution whose lithium salt concentration is 1.15 mol/L.

### (2) Preparing a positive electrode plate

The preparation method includes: mixing lithium cobalt oxide as a positive active material, Super-P as a conductive agent, and polyvinylidene difluoride as a binder at a mass ratio of 95%:2%:3%, and fully stirring and blending the mixture in an appropriate amount of N-methyl-pyrrolidone (NMP) solvent to form a homogeneous positive electrode slurry, coating the positive electrode slurry onto a 12 µm thick aluminum foil of a positive current collector, and performing drying, cold calendering, cutting, and tab welding to obtain a positive electrode plate.

### (3) Preparing a separator

A polyethylene (PE) porous polymer film is used as a separator.

### (4) Preparing a negative electrode plate

The preparation method includes: mixing artificial graphite as a negative active material, styrene butadiene rubber as a binder, and carboxymethyl cellulose as a thickener at a mass ratio of 96%:2%:2%, fully stirring and blending the mixture in an appropriate amount of a deionized water solvent to form a homogeneous negative electrode slurry; coating the negative electrode slurry onto a 12 µm thick copper foil of the negative current collector, and performing drying, cold calendering, cutting, and tab welding to obtain a negative electrode plate.

### (5) Preparing a lithium-ion battery

The preparation method includes: sequentially stacking and spirally rolling the prepared positive electrode, separator, and negative electrode to obtain an electrode assembly in which the separator is located between the positive electrode and the negative electrode to serve a separation function; placing the electrode assembly in an outer packaging shell, leaving a liquid injection port, injecting the prepared electrolytic solution from the liquid injection port, and performing steps of packaging, formation, and grading to complete preparation of the lithium-ion battery.

The types and content of additives used in Embodiments 1-27 and Comparative Embodiments 1-7 are shown in Table 1, Table 2, and Table 3. The content of each additive is a mass percent calculated based on the total mass of the electrolytic solution.

**Table 1 Parameters in Embodiments 1-15 and Comparative Embodiments 1-7**

| | Additive | | | | | |
|---|---|---|---|---|---|---|
| Serial number | Type | Content (%) | Type | Content X (%) | Type | Content Y (%) |
| Comparative Embodiment 1 | PC | 5 | | | | |
| Comparative Embodiment 2 | | | TCEP | 1 | | |
| Comparative Embodiment 3 | | | | | II-a | 0.5 |
| Comparative Embodiment 4 | PC | 5 | TCEP | 1 | | |
| Comparative Embodiment 5 | PC | 5 | | | II-a | 0.5 |
| Comparative Embodiment 6 | | | TCEP | 1 | II-a | 0.5 |
| Comparative Embodiment 7 | PC | 5 | AN | 1 | II-a | 0.5 |
| Embodiment 1 | PC | 2 | TCEP | 1 | II-a | 0.5 |
| Embodiment 2 | PC | 5 | TCEP | 1 | II-a | 0.5 |
| Embodiment 3 | PC | 10 | TCEP | 1 | II-a | 0.5 |
| Embodiment 4 | PC | 20 | TCEP | 1 | II-a | 0.5 |
| Embodiment 5 | PC | 5 | TCEP | 3 | II-a | 0.5 |
| Embodiment 6 | PC | 5 | TCEP | 5 | II-a | 0.5 |
| Embodiment 7 | PC | 5 | TCEP | 1 | II-a | 1 |
| Embodiment 8 | PC | 5 | TCEP | 0.009 | II-a | 0.001 |
| Embodiment 9 | PC | 5 | TCEP | 6 | II-a | 2 |
| Embodiment 10 | PC | 10 | TCEP | 1 | II-a | 2 |
| Embodiment 11 | PC | 20 | TCEP | 6 | II-a | 5 |
| Embodiment 12 | PC | 25 | TCEP | 1 | II-a | 6 |
| Embodiment 13 | PC | 10 | I-A | 0.5 | II-a | 0.5 |
| Embodiment 14 | PC | 10 | I-B | 0.5 | II-a | 0.5 |
| Embodiment 15 | PC | 10 | I-C | 0.5 | II-a | 0.5 |

**Table 2 Parameters in Embodiments 16-21**

| | Additive | | | | | | | |
|---|---|---|---|---|---|---|---|---|
| Serial number | Type | Content (%) | Type | Content X (%) | Type | Content Y (%) | Type | Content (%) |
| Embodiment 16 | PC | 10 | TCEP | 1 | II-a | 0.5 | AND | 3 |
| Embodiment 17 | PC | 10 | TCEP | 1 | II-a | 0.5 | HTCN | 2 |
| Embodiment 18 | PC | 10 | TCEP | 1 | II-a | 0.5 | AND+HTCN | 2+1 |
| Embodiment 19 | PC | 10 | TCEP | 1 | II-a | 0.5 | AND+LiPO₂F₂ | 2+0.5 |
| Embodiment 20 | PC | 10 | TCEP | 1 | II-a | 0.5 | HTCN+LiPO₂F₂ | 1+0.5 |
| Embodiment 21 | PC | 10 | TCEP | 1 | II-a | 0.5 | AND+HTCN+LiPO₂F₂ | 3+1+0.5 |

The lithium-ion batteries in Embodiments 3 and 22-27 are prepared based on the foregoing preparation method. The type and content of the additives in the electrolytic solution are adjusted, and a ratio of the mass M (unit: mg) of the compound represented by Formula II to the reaction area S (unit: m²) of the negative active material layer is defined, as specifically shown in Table 3.

**Table 3 Parameters in Embodiments 3 and 22-27**

| | Electrolytic solution | | | | | | | Negative active material layer | | | |
|---|---|---|---|---|---|---|---|---|---|---|---|
| Serial number | Type | o | Type | Content X (%) | Type | Content Y (%) | Mass M of the compound represented by Formula II (mg) | Specific surface area BET (m²g⁻¹) | Mass (g) | Reaction area S (m²) | M/S |
| Embodiment 3 | PC | 10 | TCEP | 1 | II-a | 0.5 | 35 | 0.35 | 5 | 1.75 | 20 |
| Embodiment 22 | PC | 10 | TCEP | 1 | II-a | 0.5 | 17.5 | 0.35 | 5 | 1.75 | 10 |
| Embodiment 23 | PC | 10 | TCEP | 1 | II-a | 0.5 | 87.5 | 0.35 | 5 | 1.75 | 50 |
| Embodiment 24 | PC | 10 | TCEP | 1 | II-a | 0.5 | 154 | 0.35 | 5 | 1.75 | 88 |
| Embodiment 25 | PC | 10 | TCEP | 1 | II-a | 0.5 | 500 | 1 | 5 | 5 | 100 |
| Embodiment 26 | PC | 10 | TCEP | 1 | II-a | 0.5 | 25 | 1 | 5 | 5 | 5 |
| Embodiment 27 | PC | 10 | TCEP | 1 | II-a | 0.5 | 525 | 1 | 5 | 5 | 105 |

The following describes a performance test process and test results of the lithium-ion battery.

An intermittent cycle performance test and a voltage drop test after high-temperature storage are performed on the lithium-ion batteries prepared in Embodiments 1-27 and Comparative Embodiments 1-7.

The following describes test methods for an intermittent cycle performance test and a voltage drop test after high-temperature storage on the lithium-ion batteries by using Embodiment 1 as an example. The test methods for the lithium-ion batteries in Embodiments 2-27 and Comparative Embodiments 1-7 are identical to the test method in Embodiment 1.

### (1) Intermittent cycle performance test

The test method includes: charging the lithium-ion battery at a temperature of 50 °C and a constant current of 0.5 C until the voltage reaches 4.45 V, then charging the battery at a constant voltage until the current reaches a cut-off current of 0.05 C, and leaving the battery to stand for 20 hours, and then discharging the battery at a constant current of 0.5 C until the voltage reaches 3.0 V; performing "charging-standing-discharging" cycles on the lithium-ion battery according to the foregoing conditions, and calculating a capacity D₀ after a first cycle and a capacity D₁ after 100 cycles; and
calculating a capacity retention rate after intermittent cycles according to the following formula: Capacity retention rate after 100 intermittent cycles (%) = (discharge capacity D1 after 100 cycles/discharge capacity D0 after the first cycle) × 100%.

### (2) Testing a voltage drop after high-temperature storage

The test method includes: charging the lithium-ion battery at a temperature of 25 °C and a constant current of 1 C until the voltage reaches 4.45 V, charging the battery at a constant voltage until the current reaches 0.05 C, discharging the battery at a constant current of 1 C until the voltage reaches 3.2 V, leaving the battery to stand for 5 minutes, and then testing the voltage, recorded as U₁; and storing the battery at 85 °C for 24 hours, and testing the voltage again, recorded as U₂; and
calculating the voltage drop of the lithium-ion battery after the high-temperature storage according to the following formula: Voltage drop after storage at 85 °C for 24 hours = voltage U1 before storage - voltage U2 after storage.

**Table 4 Test results of the intermittent cycle performance test and the voltage drop test after high-temperature storage on the lithium-ion batteries prepared in Embodiments 1-27 and Comparative Embodiments 1-7**

| Serial number | Capacity retention rate after 100 intermittent cycles (%) | Voltage drop after storage at 85 °C for 24 hours (V) |
|---|---|---|
| Comparative Embodiment 1 | 44.10% | 0.51 |
| Comparative Embodiment 2 | 52.30% | 0.45 |
| Comparative Embodiment 3 | 54.30% | 0.43 |
| Comparative Embodiment 4 | 60.30% | 0.41 |
| Comparative Embodiment 5 | 59.90% | 0.42 |
| Comparative Embodiment 6 | 54.50% | 0.45 |
| Comparative Embodiment 7 | 42.30% | 0.49 |
| Embodiment 1 | 65.10% | 0.36 |
| Embodiment 2 | 68.50% | 0.35 |
| Embodiment 3 | 82.80% | 0.22 |
| Embodiment 4 | 72.70% | 0.31 |
| Embodiment 5 | 75.80% | 0.29 |
| Embodiment 6 | 61.20% | 0.39 |
| Embodiment 7 | 73.20% | 0.23 |
| Embodiment 8 | 62.60% | 0.38 |
| Embodiment 9 | 61.90% | 0.39 |
| Embodiment 10 | 62.10% | 0.39 |
| Embodiment 11 | 61.80% | 0.39 |
| Embodiment 12 | 61.30% | 0.40 |
| Embodiment 13 | 85.60% | 0.21 |
| Embodiment 14 | 88.20% | 0.19 |
| Embodiment 15 | 89.70% | 0.17 |
| Embodiment 16 | 83.20% | 0.21 |
| Embodiment 17 | 84.50% | 0.21 |
| Embodiment 18 | 85.70% | 0.21 |
| Embodiment 19 | 87.40% | 0.19 |
| Embodiment 20 | 88.90% | 0.15 |
| Embodiment 21 | 89.70% | 0.14 |
| Embodiment 22 | 83.70% | 0.20 |
| Embodiment 23 | 84.80% | 0.20 |
| Embodiment 24 | 86.20% | 0.18 |
| Embodiment 25 | 87.10% | 0.14 |
| Embodiment 26 | 82.90% | 0.27 |
| Embodiment 27 | 81.70% | 0.26 |

As can be learned from analysis of relevant data in Tables 1 to 4, after the first additives including the propylene carbonate, the compound represented by Formula I, and the compound represented by Formula II are added into the electrolytic solution and the electrolytic solution is applied to the lithium-ion battery, the intermittent cycle performance of the lithium-ion battery is improved effectively, and the voltage drop of the electrochemical device after high-temperature storage is suppressed effectively.

As can be learned from comparison results of Embodiments 1-27, when the propylene carbonate satisfies the content range specified herein and/or the compound represented by Formula II satisfies the content range specified herein, overall effects of improving the intermittent cycle performance of the lithium-ion battery and suppressing the voltage drop of the lithium-ion battery after high-temperature storage are relatively noticeable. When the propylene carbonate satisfies the content range of 5%-20%, the overall effects of improving the intermittent cycle performance of the lithium-ion battery and suppressing the voltage drop of the lithium-ion battery after high-temperature storage are more noticeable.

As can be learned from comparison results of Embodiments 2 and 5-9, when the mass of the propylene carbonate is greater than the total mass of the compound represented by Formula I and the compound represented by Formula II, the overall effects of improving the intermittent cycle performance of the lithium-ion battery and suppressing the voltage drop of the lithium-ion battery after high-temperature storage are relatively noticeable.

As can be learned from comparison results of Embodiments 1-12, when X% and Y% fail to satisfy both relational expressions of 0.01 ≤ (X+Y) ≤ 8 and X ≥ Y, where X% is the mass percent of the compound represented by Formula I based on the total mass of the electrolytic solution, and Y% is the mass percent of the compound represented by Formula II based on the total mass of the electrolytic solution, the overall effects of improving the intermittent cycle performance of the lithium-ion battery and suppressing the voltage drop of the lithium-ion battery after high-temperature storage are relatively poor. When 1.5 ≤ (X+Y) ≤ 5.5 and X ≥ Y, the overall effects of improving the intermittent cycle performance of the lithium-ion battery and suppressing the voltage drop of the lithium-ion battery after high-temperature storage are more noticeable.

As can be learned from comparison results of Embodiments 3 and 16-21, if the second additive is added after the first additive is added, the overall effects of improving the intermittent cycle performance of the lithium-ion battery and suppressing the voltage drop of the lithium-ion battery after high-temperature storage are further enhanced. A possible reason is: the second additive and the first additive act synergistically to form a more stable composite film.

The reaction area of the negative active material is an important parameter of the battery, and affects a reaction speed and a reaction amount of film-forming additives of the electrolytic solution, and thereby affects stability of an interface between the negative electrode and the electrolytic solution. Therefore, a mixing ratio of the negative active material to ingredients of the electrolytic solution may be critical to battery performance. As can be learned from comparison results of Embodiments 3 and 22-27, when the mass M of the compound represented by Formula II and the reaction area S of the negative active material layer satisfy the relational expression of 10 ≤ (M/S) ≤ 100 (where M is measured in mg and S is measured in m²), the overall effects of improving the intermittent cycle performance of the lithium-ion battery and suppressing the voltage drop of the lithium-ion battery after high-temperature storage are relatively noticeable. When the mass M of the compound represented by Formula II and the reaction area S of the negative active material layer satisfy the relational expression of 50 ≤ (MIS) ≤ 100 (where M is measured in mg and S is measured in m²), the overall effects of improving the intermittent cycle performance of the lithium-ion battery and suppressing the voltage drop of the lithium-ion battery after high-temperature storage are more noticeable.

Although a plurality of exemplary embodiments are described above, this disclosure is not limited to the explicitly disclosed combinations. Therefore, unless otherwise specified herein, the features disclosed herein may be combined together variously. For brevity, other combinations are not described herein.
Preferred embodiments of the invention are defined in the following paras 1 to 15:
1. An electrolytic solution, characterized in that the electrolytic solution comprises a first additive, and
   the first additive comprises propylene carbonate, a compound represented by Formula I and a compound represented by Formula II; wherein, the compound of Formula I is 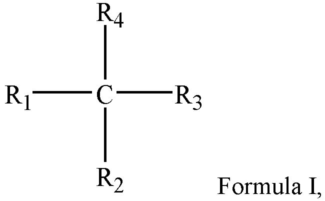
   R₁, R₂, and R₃ are each independently -(CH₂)ₐ-CN or -(CH₂)_{b}-O-(CH₂)_{c}-CN; R₄ is H, a C₁-C₅ alkyl, -(CH₂)ₐ-CN, or -(CH₂)_{b}-O-(CH₂)_{c}-CN; and at least one of R₁, R₂, R₃, and R₄ is -(CH₂)_{b}-O-(CH₂)_{c}-CN, wherein a, b, and c are each independently selected from integers in a range of 0-10;
   the compound of Formula II is 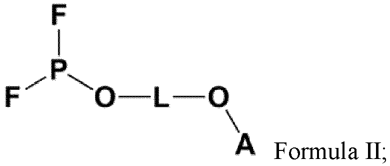 and
   in Formula II, A is a C₁-C₅ alkyl, and L is a C₁-C₁₀ alkylidene or Cₙ(Rₐ)₂₀-O-Cₘ(R_{b})₂ₘ, wherein Rₐ and R_{b} are each independently H or a C₁-C₅ alkyl, and n and m are independently selected from integers in a range of 1-5.
2. The electrolytic solution according to para 1, characterized in that,
   based on a total mass of the electrolytic solution, a mass percent of the propylene carbonate is 2%-20%; and/or
   based on a total mass of the electrolytic solution, a mass percent of the compound represented by Formula II is 0.001%-5%.
3. The electrolytic solution according to para 1 or 2, characterized in that,
   a mass of the propylene carbonate is greater than a total mass of the compound represented by Formula I and the compound represented by Formula II.
4. The electrolytic solution according to any one of paras 1 to 3, characterized in that, 0.01 ≤ (X+Y) ≤ 8, and X ≥ Y;
   wherein, X is a mass percent (X%) of the compound represented by Formula I based on a total mass of the electrolytic solution and Y is a mass percent (Y%) of the compound represented by Formula II based on the total mass of the electrolytic solution.
5. The electrolytic solution according to any one of paras 1 to 4, characterized in thatthe compound represented by Formula I comprises at least one of 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tri s(cyanoethoxy)heptane, 1,2,6-tris(cyanoethoxy)hexane, 1,2,5-tris(cyanoethoxy)pentane, or a compound represented by Formula I-C: 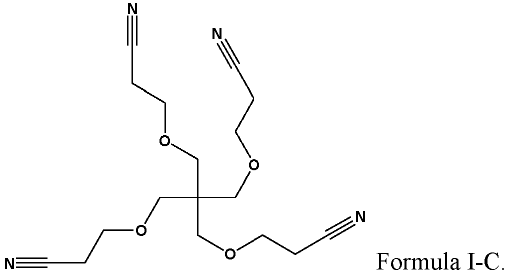
6. The electrolytic solution according to any one of paras 1 to 5, characterized in that
   the compound represented by Formula II comprises at least one of compounds represented by Formula II-A: 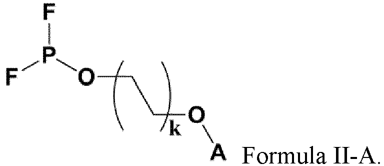
   in Formula II-A, A is a C₁-C₅ alkyl, and k is selected from integers in a range of 1-5.
7. The electrolytic solution according to any one of paras 1 to 6, further comprising a second additive, characterized in that the second additive comprises at least one of adiponitrile, 1,3,6-hexanetrinitrile, or lithium difluorophosphate.
8. The electrolytic solution according to para 7, characterized in that, based on a total mass of the electrolytic solution, a mass percent of the second additive is 0.01%-15%.
9. The electrolytic solution according to para 7, characterized in that, based on the total mass of the electrolytic solution, a content of the propionate is 1.5-30 times the content of the second additive.
10. The electrolytic solution according to any one of paras 7 to 9, characterized in that, the electrolytic solution further includes a third additive, the third additive comprises at least one of a negative electrode coating film forming agent, a positive electrode protection agent, an overcharge prevention agent, or any combination thereof.
11. The electrolytic solution according to para 10, characterized in that, based on the total mass of the electrolytic solution, a mass percent of the third additive is 0-5%.
12. An electrochemical device, characterized in that the electrochemical device comprising a positive electrode plate, a negative electrode plate, a separator, and the electrolytic solution according to any one of paras 1 to 11.
13. The electrochemical device according to para 12, characterized in that the negative electrode plate comprises a negative current collector and a negative active material layer, the negative active material layer is disposed on a surface of the negative current collector, and the negative active material layer comprises a negative active material; and
   10 ≤ (M/S) ≤ 100, wherein M is a mass of the compound represented by Formula II and S is a reaction area of the negative active material layer, wherein M is measured in mg and S is measured in m².
14. The electrochemical device according to para 13, characterized in that, the mass M of the compound represented by Formula II is 17.5mg-525 mg, and the reaction area S of the negative active material layer is 1.75 m²-5 m².
15. An electronic device, characterized in that the electronic device comprising the electrochemical device according to any one of paras 12 to 14.

## Claims

1. An electrolytic solution, **characterized in that**, the electrolytic solution comprises a first additive and a second additive, wherein
the first additive comprises propylene carbonate, a compound represented by Formula I, and a compound represented by Formula II; wherein, the compound of Formula I is 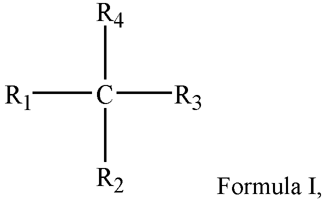
R₁, R₂, and R₃ are each independently -(CH₂)ₐ-CN or -(CH₂)_{b}-O-(CH₂)_{c}-CN; R₄ is H, a C₁-C₅ alkyl, -(CH₂)ₐ-CN, or -(CH₂)_{b}-O-(CH₂)_{c}-CN; and at least one of R₁, R₂, R₃, and R₄ is -(CH₂)_{b}-O-(CH₂)_{c}-CN, wherein a, b, and c are each independently selected from integers in a range of 0-10;
the compound of Formula II is 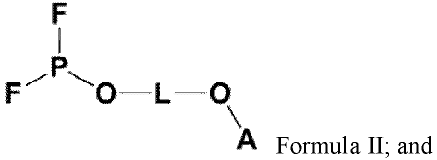
in Formula II, A is a C₁-C₅ alkyl, and L is a C₁-C₁₀ alkylidene or Cₙ(Rₐ)₂₀-O-Cₘ(R_{b})₂ₘ, wherein Rₐ and R_{b} are each independently H or a C₁-C₅ alkyl, and n and m are independently selected from integers in a range of 1-5; wherein
the second additive comprises at least one of adiponitrile, 1,3,6-hexanetrinitrile, or lithium difluorophosphate.

2. The electrolytic solution according to claim 1, **characterized in that**, based on a total mass of the electrolytic solution, a mass percentage of the propylene carbonate is 2%-20%.

3. The electrolytic solution according to claim 1 or 2, **characterized in that**, based on a total mass of the electrolytic solution, a mass percentage of the compound represented by Formula II is 0.001%-5%.

4. The electrolytic solution according to any one of claims 1 to 3, **characterized in that**, based on a total mass of the electrolytic solution, a mass of the propylene carbonate is greater than a total mass of the compound represented by Formula I and the compound represented by Formula II.

5. The electrolytic solution according to any one of claims 1 to 4, **characterized in that**, 0.01 ≤ (X+Y) ≤ 8, and X ≥ Y;
wherein, X is a mass percentage (X%) of the compound represented by Formula I based on a total mass of the electrolytic solution and Y is a mass percentage (Y%) of the compound represented by Formula II based on the total mass of the electrolytic solution.

6. The electrolytic solution according to any one of claims 1 to 5, **characterized in that**, the compound represented by Formula I comprises at least one of 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tri s(cyanoethoxy)heptane, 1,2,6-tris(cyanoethoxy)hexane, 1,2,5-tris(cyanoethoxy)pentane, or a compound represented by Formula I-C:

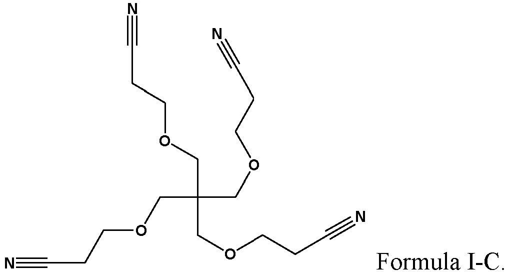

7. The electrolytic solution according to any one of claims 1 to 6, **characterized in that**, the compound represented by Formula II comprises at least one of compounds represented by Formula II-A: 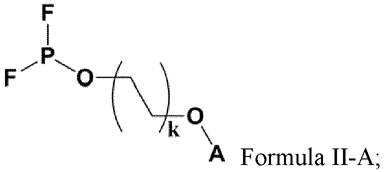 in Formula II-A, A is a C₁-C₅ alkyl, and k is selected from integers in a range of 1-5.

8. The electrolytic solution according to any one of claims 1 to 7, **characterized in that**, based on a total mass of the electrolytic solution, a mass percentage of the second additive is 0.01%-15%.

9. The electrolytic solution according to any one of claims 1 to 8, **characterized in that**, the electrolytic solution comprises propionate.

10. The electrolytic solution according to claim 9, **characterized in that**, based on a total mass of the electrolytic solution, a mass percentage of the propionate is 1.5-30 times a mass percentage of the second additive.

11. The electrolytic solution according to claim 9 or 10, **characterized in that**, the propionate is at least one of methyl propionate, ethyl propionate, or propyl propionate.

12. An electrochemical device, **characterized in that** the electrochemical device comprising a positive electrode plate, a negative electrode plate, a separator, and the electrolytic solution according to any one of claims 1 to 11.

13. The electrochemical device according to claim 12, **characterized in that**, the negative electrode plate comprises a negative current collector and a negative active material layer, the negative active material layer is disposed on a surface of the negative current collector, and the negative active material layer comprises a negative active material; and
10 ≤ (M/S) ≤ 100, wherein M is a mass of the compound represented by Formula II and S is a reaction area of the negative active material layer, wherein M is measured in mg and S is measured in m².

14. The electrochemical device according to claim 13, **characterized in that**, the mass of the compound represented by Formula II is 17.5mg-525 mg, and the reaction area of the negative active material layer is 1.75 m²-5 m².

15. An electronic device, **characterized in that** the electronic device comprising the electrochemical device according to any one of claims 12 to 14.
